# EUROPEAN PATENT SPECIFICATION

(11) **EP 1 625 277 B1**
(45) Date of publication and mention of the grant of the patent: **17.10.2007**
(21) Application number: 04730149.4
(22) Date of filing: 28.04.2004
(51) Int. Cl.: E21B 17/02

(54) **A CONNECTION ROD FOR ROCK DRILLING AND A METHOD OF PRODUCING THE SAME.**
VERBINDUNGSSTAB FÜR GESTEINSBOHRUNG UND HERSTELLUNGSVERFAHREN DAFÜR
BARRE DE LIAISON UTILISEE POUR LE FORAGE DE ROCHES, ET SON PROCEDE DE PRODUCTION

(30) Priority: 16.05.2003 SE 0301422
(43) Date of publication of application: 15.02.2006
(73) Proprietor: Atlas Copco Secoroc AB, 737 25 Fagersta (SE)
(72) Inventor: NORDFELDT, Leif, S-777 94 SÖDERBÄRKE (SE)
(74) Representative: Karlström, Lennart
(86) International application number: PCT/SE2004/000655
(87) International publication number: WO 2004/101948

(56) References cited:
- WO-A1-97/49520
- WO-A1-20/04029403
- WO-A2-01/42615
- US-A- 5 988 301
- US-A- 6 095 266

## Description

The present invention relates to a connecting rod of the kind in rock drilling operations, both with regard to underground and surface drilling. The invention also relates to a method of producing such a rod.

When drilling in rock, connecting rods, or extension pieces, are used between drill bit and shank adapter to enable holes of desired depths to be drilled. The rods are connected to one another and to the drill bit and shank adapter by means of screw joints.

The rods are produced in mutually different lengths with regard to underground drilling, normally lengths of up to about 3 m, and up to about 6 m with regard to surface drilling. A typical rod will have an external thread at one end and an internal thread at its other end. The rod is straight between the two threaded ends.

In the case of surface drilling, the connecting rods used are normally in the form of hot-rolled hollow rods which have been surface hardened at their thread-carrying ends. However, it has been found problematic to achieve satisfactory surface hardening of the internal thread, owing to the difficulty in obtaining a uniform profile depth. In the case of underground drilling, it has therefor been preferred to have a case hardened internal thread, which makes it necessary to case harden the entire connecting rod and therewith increase production costs.

From WO 01/42615 A2 is previously known a drill rod of the aforesaid type, in which is described that such a drill rod can be manufactured in that two rod sections, one carrying at its one end an internally threaded portion and the other at its one end carrying an externally threaded portion, are welded together along their mating ends. This welding can preferably be made by friction welding.

Also from WO 2004/029403 A1, being a document pursuant to Article 54(3) and (4) EPC, having a priority date only about eight months prior to the present application, is known to make a drill rod of the aforementioned kind, in which two, or three, rod parts are connected to each other by friction welding.

However, in none of these documents have been realised that friction welding can be used to essentially lower the manufacturing costs and at the same time obtain even better properties for mating ends of the connecting rods, especially for the end having an internal threading.

Consequently, an object of the present invention is to provide a novel type of connecting rod with which satisfactory hardening of the internally threaded end can be achieved in particular while still keeping production costs down to a reasonable level.

The object of the invention is achieved with a connecting rod which includes a first part having an external thread at one end and at its opposite end an end portion that carries an internal thread, wherein said end portion is joined to the first rod part by friction welding, wherein the end portion is made of another material than that of the first rod part, and wherein said end portion has been heat treated prior to being joined to the first rod part.

According to one preferred embodiment of the invention end portion carrying the internal thread is case hardened.

According to a further embodiment of the invention the first rod part includes an external thread on that end of said rod part located opposite to the end portion carrying said internal thread.

As mentioned in the introduction, one object of the present invention resides in the provision of a method of producing a connection rod according to the present invention.

This object is achieved by the steps of producing a separate end portion that includes an internal thread, heat treating said end portion, and thereafter joining the separately produced end portion with the remainder of the connection rod by friction welding.

According to a preferred embodiment of the inventive method the separately produced end portion is case hardened prior to being joined to the remainder of the connection rod.

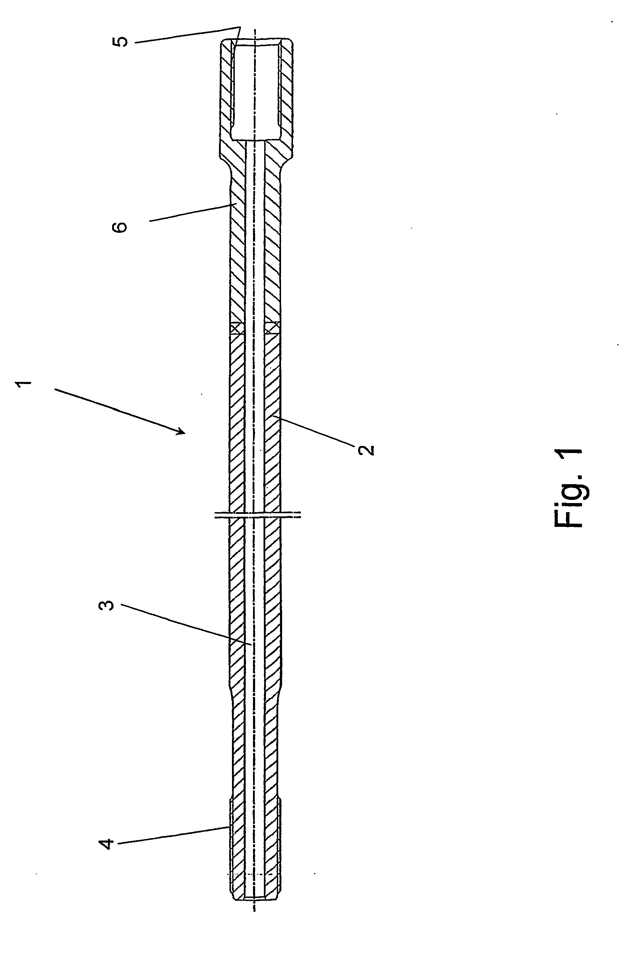

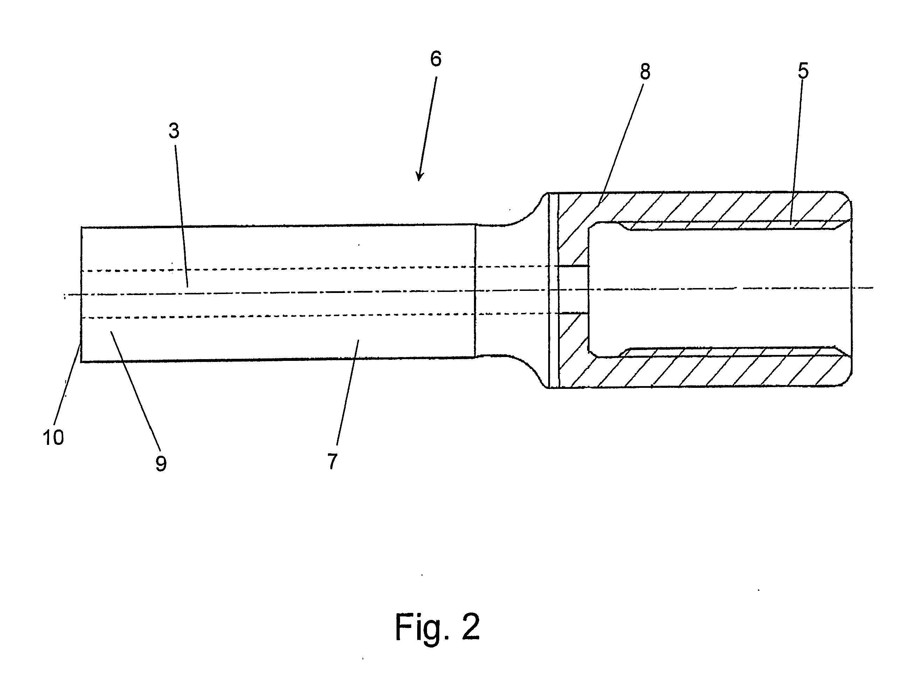

The invention will now be described with reference to a nonlimiting example thereof and also with reference to the accompanying drawings, in which Figure 1 is a schematic longitudinal sectioned view of a connection rod according to the present invention, and Figure 2 is a schematic side view, partly in section, of an end portion intended for the inventive connection rod.

The connection rod 1 illustrated in Figure 1 includes a central section 2 which is formed by a round hot-rolled rod that has a centrally throughpassing hole 3. The rod 1 includes at one end an external thread 4 and at its opposite end an end portion 6 that includes an internal thread 5.

Connecting rods 1 of this design can, in principle, be connected in infinite lengths, by screwing the external thread 4 into an internal thread of another rod.

As will be apparent from Fig. 1, the end portion 6 carrying the internal thread 5 is formed from a material different to that of the remainder of the rod 1. On the other hand, the rod end carrying the external thread is comprised of the same hot-rolled rod as the central section 2 of the connection rod.

Thus, in accordance with the invention, the end portion 6 carrying the internal thread 5 is comprised of a material that is different to the material of said central section 2 and that has been specially heat treated in a way different to that of said central section 2 and thereafter joined to the central section 2 by friction welding.

The heat treatment process to which the end portion 6 is subjected prior to being joined to the central part 2 of the rod is conveniently a case hardening process that will enhance the mechanical strength of the internal thread 5 and the part of the rod joined thereto, i.e. essentially the whole of the end portion 6. The maximum stresses due to the thread connection often occur somewhat inwardly of the actual thread 5, as seen from the adjacent end of the connection rod/the end portion. The heat treated end portion therefore includes a shaft portion 7 that extends somewhat from the expanded part 8 of the end portion, said expanded part 8 including the internal thread 5. Essentially the whole of the end portion 6, including the shaft portion 7, is heat treated/hardened in the same way.

In order to optimise material properties in the friction welding process, it is necessary to exclude the end 9 of the end portion 6 from the case hardening process. The end portion 6 is therefore given a protective coating or covering at the opposite end 9, at a distance from the end surface 10 in a direction towards the expanded part 8, prior to the case hardening process. This protective covering or coating is applied to the actual end surface 10 and to the outside of the shaft part 7 and also to the central throughpassing hole 3 in said shaft part. The protective coating is applied over a distance of 20 - 50 mm from the end surface 10 and functions to prevent the coated surfaces from taking up carbon during the carbonisation process, this process resulting in a higher surface content of carbon in the end portion 6. It is true that the coated opposite end 9 of the end portion will be hardened to some extent in a following heat treatment process, but no case hardening will take place at this particular part of the end portion 6.

By producing the end portion 6 as a separate part and heating said part per se, there can be produced, in accordance with the invention, an optimised connection rod, where that part of the rod which is most subjected to stress, i.e. the central part 2, and the end of the rod carrying the external thread 4 are also treated *per se*. For example, the external thread can be heated treated in the manner required, e. g. surface hardened or tough-hardened, whereas the end portion 6 can be case hardened so as to increase its wear strength.

Respective parts 2 and 6 of the connection rod, each having been heat treated per se, are then joined together by friction welding. The thus combined connection rod can then be treated unitarily, for instance shot peening the join area, to enhance its endurance strength, and then straightened and coated. The threads at respective ends of the rod can then be treated to protect against corrosion, in a traditional manner.

As will be understood, after the end portion 6 has been joined to the central part 2 by friction welding it is not necessary to heat treat the final product.

The invention thus provides a connection rod that is optimal in respect of many different applications and that can be used in both underground drilling and in surface drilling and where each respective part of the rod has been adequately heat treated.

As mentioned in the introduction, the invention also relates to a method of producing a connection rod in accordance with the invention. This method will be apparent from the above detailed description of the inventive connection rod.

It will be understood that the internal thread 5 and the external thread 4 can be heat treated in accordance with other appropriate methods than those described above. Despite the possibility of heat treating the various parts of the rod with different methods, an important feature of the invention resides in the ability to achieve such treatment without needing to heat treat the whole of the rod in one and the same way.

## Claims

1. A connection rod (1) for rock drilling comprising a first rod part (2) which has an external thread (4) provided at one end thereof and at the end of the rod opposite to said one end is provided with an end portion (6) which carries an internal thread (5) which end portion (6) is joined to the first rod part (2) by friction welding, **characterised in that** the end portion (6) is made of another material than that of the first rod part (2); and **in that** the end portion (6) has been heat treated prior to being joined to the first rod part (2).

2. A connection rod according to Claim 1, **characterised in that** the end portion (6) is case hardened.

3. A connection rod according to Claim 1 or 2, **characterised in that** the end portion (6) includes a shaft part (7) that extends away from the internal thread (5), said shaft part being that part of the end portion which has been joined to the first rod part (2).

4. A connection rod according to any one of the preceding Claims, **characterised in that** the first rod part (2) is comprised of hot rolled rod.

5. A connection rod according to any one of the preceding Claims, **characterised in that** the external thread (4) provided on said one end is surface hardened.

6. A connection rod according to any one of Claims 1 to 4, **characterised in that** the external thread (4) provided on said one end is tough-hardened.

7. A method of producing a connection rod (1) that comprises an external thread (4) at one end, **characterised by** producing and heat treating a separate end portion (6) that includes an internal thread (5), said separate end portion (6) being made from another material than that of the remainder (2) of the connection rod, and joining said separate end portion (6) to the remainder of the rod by friction welding.

8. A method according to Claim 7, **characterised by** case hardening the separately produced end portion (6) prior to joining said end portion to the remaining portion (2) of the rod.

9. A method according to Claim 7, **characterised by** providing that part of the end portion (6) lying closest to the end (9) to be joined to the remaining portion (2) of the rod with a protective coating or covering and thereafter case hardening the separately produced end portion (6) prior to joining said end portion to the remaining portion (2) of the rod.

10. A method according to Claim 9, **characterised by** applying said protective coating to the end surface (10) that is to be joined to the remaining portion (2) of the rod, and also to the outer and inner surfaces of the end portion (6) along a distance of 20 - 50 mm from the end surface (10).

11. A method according to any one of Claims 7 - 10, **characterised by** surface hardening the external thread (4).

12. A method according to any one of Claims 7 - 10, **characterised by** tough-hardening the external thread (4).

## Patentansprüche

1. Verbindungsstab (1) für Gesteinsbohrung umfassend einen ersten Stabteil (2), der an einem Ende ein Außengewinde (4) aufweist, und an dem diesem Ende entgegengesetzten Ende des Stabes mit einem Endstück (6) versehen ist, das ein Innengewinde (5) trägt, wobei das Endstück (6) mit dem ersten Stabteil (2) durch Reibschweißung verbunden ist, **dadurch gekennzeichnet, dass** das Endstück (6) aus einem anderen Material gefertigt ist, als der erste Stabteil (2); und dass das Endstück (6) wärmebehandelt worden ist, bevor es mit dem ersten Stabteil (2) verbunden wurde.

2. Verbindungsstab nach Anspruch 1, **dadurch gekennzeichnet, dass** das Endstück (6) einsatzgehärtet ist.

3. Verbindungsstab nach einem der Ansprüche 1 oder 2, **dadurch gekennzeichnet, dass** das Endstück (6) einen Schaftteil (7) umfasst, der vom Innengewinde (5) wegweist, wobei der Schaftteil jener Teil des Endstücks ist, der mit dem ersten Stabteil (2) verbunden worden ist.

4. Verbindungsstab nach einem der vorangehenden Ansprüche, **dadurch gekennzeichnet, dass** der erste Stabteil (2) aus einem warmgewalzten Stab besteht.

5. Verbindungsstab nach einem der vorangehenden Ansprüche, **dadurch gekennzeichnet, dass** das an einem Ende vorgesehene Außengewinde (4) oberflächengehärtet ist.

6. Verbindungsstab nach einem der Ansprüche 1 bis 4, **dadurch gekennzeichnet, dass** das an einem Ende vorgesehene Außengewinde (4) vergütet ist.

7. Verfahren zur Herstellung eines Verbindungsstabes (1), der an einem Ende ein Außengewinde (4) umfasst, **dadurch gekennzeichnet, dass** ein gesondertes Endstück (6) hergestellt und wärmebehandelt wird, das ein Innengewinde (5) umfasst, wobei das gesonderte Endstück (6) aus einem anderen Material gefertigt ist als der Rest (2) des Verbindungsstabes, und das gesonderte Endstück (6) mit dem Rest des Stabes durch Reibschweißung verbunden wird.

8. Verfahren nach Anspruch 7, **dadurch gekennzeichnet, dass** das gesondert hergestellte Endstück (6) einsatzgehärtet wird, bevor es mit dem restlichen Teil (2) des Stabes verbunden wird.

9. Verfahren nach Anspruch 7 **dadurch gekennzeichnet, dass** der Teil des Endstückes (6), der dem Ende (9), das mit dem restlichen Teil (2) des Stabes verbunden wird, am nächsten liegt, mit einem Schutzüberzug oder einer Beschichtung versehen wird und dass danach das gesondert hergestellte Endstück (6) einsatzgehärtet wird, bevor es mit dem restlichen Teil (2) des Stabes verbunden wird.

10. Verfahren nach Anspruch 9, **dadurch gekennzeichnet, dass** der Schutzüberzug auf die Stirnfläche (10), die mit dem restlichen Teil (2) des Stabes verbunden wird, und auch auf die äußeren und inneren Oberflächen des Endstückes (6) entlang einer Distanz von 20-50 mm von der Stirnfläche (10) aufgebracht wird.

11. Verfahren nach einem der Ansprüche 7-10, **dadurch gekennzeichnet, dass** das Außengewinde (4) oberflächengehärtet wird.

12. Verfahren nach einem der Ansprüche 7-10, **dadurch gekennzeichnet, dass** das Außengewinde (4) vergütet wird.

## Revendications

1. Barre de liaison (1) utilisée pour le forage des roches, comprenant une première partie de barre (2) munie d'un filetage externe (4) à l'une de ses extrémités, tandis que l'extrémité opposée de la barre est munie d'une partie d'extrémité (6) qui porte un filetage interne (5), cette partie d'extrémité (6) étant reliée à la première partie de barre (2) par soudure à friction,
**caractérisée en ce que**
la partie d'extrémité (6) portant le filetage interne est réalisée dans un autre matériau que celui de la première partie de barre (2) ; et
la partie d'extrémité (6) portant le filetage interne a été traitée thermiquement avant d'être reliée à la première partie de barre (2).

2. Barre de liaison selon la revendication 1,
**caractérisée en ce que**
la partie d'extrémité (6) est cémentée.

3. Barre de liaison selon l'une des revendications 1 ou 2,
**caractérisée en ce que**
la partie d'extrémité (6) comprend une partie de tige (7) qui s'étend à l'opposé du filetage interne (5), cette partie de tige formant la portion d'extrémité reliée à la première partie de barre (2).

4. Barre de liaison selon l'une des revendications précédentes,
**caractérisée par**
une première partie de barre (2) laminée à chaud.

5. Barre de liaison selon l'une des revendications précédentes,
**caractérisée en ce que**
le filetage externe (4), sur la première extrémité, est durci en surface.

6. Barre de liaison selon l'une des revendications précédentes,
**caractérisée en ce que**
le filetage externe (4), sur la première extrémité, est trempé.

7. Procédé de fabrication d'une barre de liaison (1) comprenant un filetage externe (4) à une extrémité,
selon lequel
on produit et on traite thermiquement une partie d'extrémité séparée (6) comprenant un filetage interne (5), en la réalisant dans un autre matériau que celui du reste (2) de la barre de liaison, et
on relie la partie d'extrémité séparée (6) au reste de la barre, par soudure à friction.

8. Procédé selon la revendication 7,
**caractérisée en ce qu'**
il consiste à cémenter la partie d'extrémité produite séparément (6) avant de la relier à la partie restante (2) de la barre.

9. Procédé selon la revendication 7,
selon lequel
on recouvre d'un enduit ou revêtement de protection la portion de la partie d'extrémité (6) la plus proche de l'extrémité (9) devant être reliée à la partie restante (2) de la barre, et
on cémente ensuite la partie d'extrémité produite séparément (6) avant de la relier à la partie restante (2) de la barre.

10. Procédé selon la revendication 9,
**caractérisée en ce qu'**
on applique le revêtement de protection à la surface d'extrémité (10) qui doit être reliée à la partie restante (2) de la barre, ainsi qu'aux surfaces extérieure et intérieure de la partie d'extrémité (6), sur une longueur de 20 à 50 mm à partir de la surface d'extrémité (10).

11. Procédé selon l'une des revendications 7 à 10,
**caractérisée en ce qu'**
il consiste à durcir en surface le filetage externe (4).

12. Procédé selon l'une des revendications 7 à 10,
**caractérisée en ce qu'** il consiste à tremper le filetage externe (4).
